(19) Europäisches Patentamt / European Patent Office / Office européen des brevets

(11) **EP 2 936 996 A1**

(12) **EUROPEAN PATENT APPLICATION**
published in accordance with Art. 153(4) EPC

(43) Date of publication:
**28.10.2015 Bulletin 2015/44**

(21) Application number: **13865946.1**

(22) Date of filing: **19.12.2013**

(51) Int Cl.:
**A23K 1/18** *(2006.01)*     **A23K 1/16** *(2006.01)*

(86) International application number:
**PCT/JP2013/084071**

(87) International publication number:
**WO 2014/098179 (26.06.2014 Gazette 2014/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.12.2012  JP 2012277502**

(71) Applicant: **Unicharm Corporation
Shikokuchuo-shi, Ehime 799-0111 (JP)**

(72) Inventors:
• **UCHII Sayaka
Itami-shi
Hyogo 664-0831 (JP)**
• **IKEDA Go
Itami-shi
Hyogo 664-0831 (JP)**

(74) Representative: **Peter, Julian
Staeger & Sperling
Partnerschaftsgesellschaft mbB
Sonnenstrasse 19
80331 München (DE)**

(54) **METHOD FOR PRODUCING PET FOOD, AND PET FOOD**

(57)     There is provided a method of producing pet food including: granulating a mixture of raw ingredients to form food grains; baking the food grains; and adding water to the food grains obtained by the baking.

EP 2 936 996 A1

**Description**

Technical Field

The present invention relates to a method of producing pet food and pet food. More specifically, the present inventon relates to pet food in which biting properties (also referred to as preference) of a pet are improved and a method of producing the pet food.

Priority is claimed on Japanese Patent Application No. 2012-277502, filed December 19, 2012, the content of which is incorporated herein by reference.

Background Art

A method of producing pet food by granulating a pet food composition in which raw ingredients of well-balanced nutrition are mixed, drying the mixture to reduce the water content to 10% or less, performing a heating treatment at a temperature of approximately 180°C, coating the granules with oil, and further coating the granules, which are coated with oil, with an additive that provides various flavors is disclosed (PTL 1).

Citation List

Patent Literature

[PTL 1] Japanese Patent No. 2629003

Summary of Invention

Technical Problem

The pet food disclosed in PTL 1 is a so-called dry type pet food. Since the water content thereof is reduced and the food texture is changed when the pet food is heated, the biting properties of a pet are not excellent.

The invention has been made in consideration of the above-described problem, and an object thereof is to provide a method of producing pet food which has excellent biting properties of a pet and provides a smell preferred by a pet and the pet food produced according to the production method. In addition, examples of a pet include a cat and a dog. Among these, a dog is preferable.

The "biting properties" in the application indicate the preference of a pet with respect to pet food. That is, the biting properties are represented by the selectivity of pet food arbitrarily selected by a pet when at least two kinds of pet food for comparison and contrast are provided for the pet at the same time.

An evaluation method thereof will be specifically described in Examples.

Solution to Problem

(1) A method of producing pet food including: granulating a mixture of raw ingredients to form food grains; baking the food grains; and adding water to the food grains obtained by the baking.

(2) The method of producing pet food according to (1), in which the water content of the food grains obtained after the adding of water is in a range of 6% by weight to 12% by weight.

(3) The method of producing pet food according to (1) or (2), in which the water content of the food grains provided for the baking is in a range of 6% by weight to 12% by weight.

(4) The method of producing pet food according to any one of (1) to (3), in which the mixture of raw ingredients contains reducing sugar and amino acids.

(5) The method of producing pet food according to any one of (1) to (4) further includes applying far-infrared rays to perform the baking.

(6) The method of producing pet food according to any one of (1) to (5) further includes granulating food grains whose shortest diameter and longest diameter are in a range of 3 mm to 30 mm.

(7) The method of producing pet food according to any one of (1) to (6) further includes drying the granulated food grains with hot air in a temperature range of 100°C to 150°C before the baking.

(8) The method of producing pet food according to any one of (1) to (7) further includes coating the food grains with oils and fats after the adding of water.

(9) Pet food which is manufactured by the method of manufacturing pet food according to any one of (1) to (8).

Another aspect of the invention is as follows.

(1) A method of producing pet food including: granulating a mixture of raw ingredients to form food grains; baking the food grains; and adding water to the food grains obtained by the baking.
(2) The method of producing pet food according to (1), in which the water content of the food grains obtained after the adding of water is in a range of 6% by weight to 12% by weight based on the total mass of the food grains.
(3) The method of producing pet food according to (1) or (2), in which the water content of the food grains provided for the baking is in a range of 6% by weight to 12% by weight based on the total mass of the food grains.
(4) The method of producing pet food according to any one of (1) to (3), in which the mixture of raw ingredients contains reducing sugar and amino acids.
(5) The method of producing pet food according to any one of (1) to (4) further includes applying far-infrared rays to perform the baking.
(6) The method of producing pet food according to any one of (1) to (5) further includes granulating food grains whose shortest diameter and longest diameter are in a range of 3 mm to 30 mm.
(7) The method of producing pet food according to any one of (1) to (6) further includes drying the granulated food grains with hot air in a temperature range of 100°C to 150°C before the baking.
(8) The method of producing pet food according to any one of (1) to (7) further includes coating the food grains with oils and fats after the adding of water.
(9) Pet food which is manufactured by the method of manufacturing pet food according to any one of (1) to (8).

Advantageous Effects of Invention

According to the methods of producing pet food of the invention, it is possible to produce pet food which has excellent biting properties of a pet and has a smell that is more excellent than that of pet food in the related art and is preferred by a pet.

Brief Description of Drawing

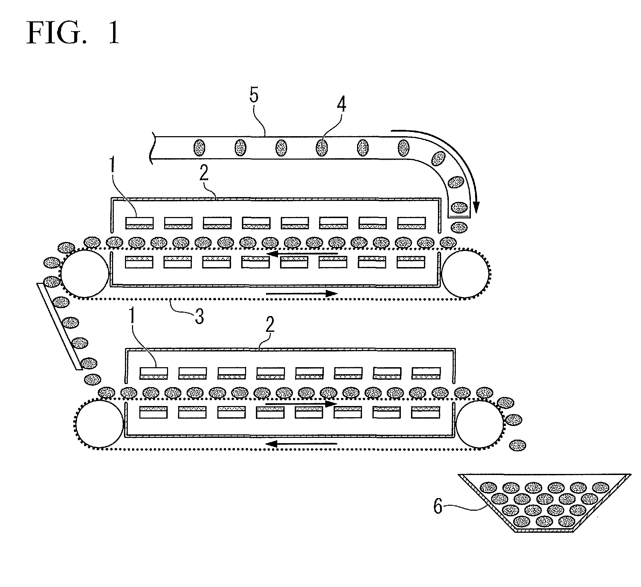

FIG. 1 is a view schematically illustrating an example of a baking process of a production method according to the invention.

Description of Embodiments

«Method of producing pet food» <First embodiment>

A first embodiment of the invention is a method of producing pet food by granulating a mixture of raw ingredients to form food grains; baking the food grains; and adding water to the food grains obtained by the baking.
The method of producing pet food of the first embodiment includes at least a process (granulating process) of granulating a mixture of raw ingredients to obtain food grains, a process (baking process) of baking the granulated food grains, and a process (water adding process) of adding water to the baked food grains.
In the related art, since the food grains are heated by being fried in oil, the oil content of the obtained food grains becomes excessive in some cases and thus adjustment of the oil content becomes difficult. When considering the health of a pet, pet food with excessive oil is not desirable.
Meanwhile, in the invention, since the food grains are baked, the oil content of the food grains obtained after baking does not become excessive. It is possible to more easily adjust the oil content of the pet food because oil whose amount is controlled to be a healthy amount can be added thereto. That is, it is possible to easily plan nutrition such as calories of the pet food by baking the food grains. In addition, in a case where food grains fried in oil in the related art contain a large amount of oil, the addition of water to the pet food in the water adding process described below becomes difficult in some cases. Meanwhile, since the oil content of the baked food grains being excessive is unlikely to occur in the pet food of the invention, water can be easily added in the water adding process. In addition, the flavor and the food texture of the pet food can be improved by baking the food grains.
The water content of the food grains after baking is generally in the range of 2% by weight to 6% by weight based on the total weight of the food grains. When the water content of the food grains is maintained in this state, the biting properties of a pet are degraded. In addition, when a large amount of water (for example, approximately 15% by weight based on the total weight of the food grains) is contained in the food grains before baking for the purpose of increasing the water content of the food grains after baking, a savory smell that stimulates the pet's appetite is unlikely to be generated in the food grains at the time of baking.

In order to solve these problems, in the first embodiment of the invention, water is added to the food grains after baking. In a first aspect of the invention, the water content of the food grains after water is added is in the range of 6% by weight to 12% by weight based on the total weight of the food grains. In another aspect of the invention, the water content of the food grains after water is added is in the range of 7% by weight to 11% by weight based on the total weight of the food grains. In still another aspect of the invention, the water content of the food grains after water is added is in the range of 8% by weight to 10% by weight based on the total content of the food grains. When the water content of the food grains is in the above-described ranges, the hardness of the pet food becomes equivalent to that of the pet food before baking and thus the biting properties of a pet can be improved. Further, since volatilization of savory aroma components generated at the time of baking is promoted by evaporation of the added water, it is possible to allow not only a pet but also the owner of the pet to feel that the pet food of the first embodiment of the invention has a more savory smell.

Hereinafter, each process will be described.

<Granulating process>

The granulating process is a process of granulating a mixture of raw ingredients to obtain food grains.

As the raw ingredients, raw ingredients normally used as complete nutritional food of the pet food can be used. As important nutrients contained in the raw ingredients, proteins and carbohydrates are exemplified.

Examples of proteins include vegetable-derived proteins, animal-derived proteins, and a mixture of these. Specifically, examples of the vegetable-derived proteins include gluten, wheat protein, soy protein, rice protein, and corn protein. Examples of the animal-derived protein include proteins such as muscles and organs of cattle, pigs, chickens, and seafood; protein of milk; and a mixture of these. Since raw ingredients containing these proteins may generally contain fats, vitamins, and iron, these can be used as nutrient sources.

Preferred examples of the carbohydrates include carbohydrates of cereals such as corn, wheat, barley, oat, rice, and soybeans. Since these cereals may contain proteins, ash content, minerals, and vitamins in addition to carbohydrates, these can be used as nutrient sources.

That is, examples of the raw ingredients used in the invention include cereals such as corn, wheat flour, corn gluten meal, and soybeans; meat such as beef, pork, chicken, chicken meal, and pork meal; and seafood such as fish meat and fish meal, and raw ingredients can be appropriately selected from these and then mixed. In addition, vitamins, minerals, reducing sugar, amino acids, water, vegetable oil, animal fats and oils, chicken extract, or fish extract can be added to the raw ingredients.

Reducing sugar may be added to the mixture. The mixed reducing sugar can generate a larger amount of savory aroma components which may improve the biting properties of a pet by causing a Maillard reaction between a hydrolyzate such as amino acids or proteins in the mixture or proteins. In order to further promote the Maillard reaction at the time of baking, it is preferable to added amino acids together with reducing sugar to the mixture.

The reducing sugar contains aldoses including an aldehyde group and ketoses including a ketone group when sugar having a cyclic structure is opened.

Examples of the reducing sugar include monosaccharides such as glucose, fructose, and arabinose; disaccharides such as lactose and maltose; and oligosaccharides.

The molecular weight of the reducing sugar is mostly 1000 or less, but reducing sugar whose molecular weight exceeds 1000 is occasionally contained in isomerized sugar which is a kind of reducing sugar.

The content of the reducing sugar in the mixture is not particularly limited, but 0.1 % by weight to 5.0% by weight of reducing sugar can be contained based on the total weight of the mixture of the raw ingredients. The reducing sugar may be used alone or in a combination of two or more kinds thereof.

The kinds of amino acids are not particularly limited and known amino acids can be applied. Examples thereof include glycine, valine, phenylalanine, lysine, arginine, cysteine, and proline. The amino acids may be used alone or in a combination of two or more kinds thereof. In the case where two or more kinds are used in a combination, a hydrolyzate of proteins may be used as a mixture of two or more amino acids. The preference of the pet food can be further improved by combining two or more kinds of amino acids.

The content of the amino acids in the mixture is not particularly limited, but 0.1% by weight to 5.0% by weight of amino acids can be contained based on the total weight of the mixture of raw ingredients.

The method of mixing reducing sugar or amino acids in the mixture is not particularly limited and a method of adding powdery or liquid-like reducing sugar dissolved in water or the like or amino acids to the raw ingredients to be mixed can be exemplified.

The mixture can be obtained by mixing the raw ingredient in a desirable blending ratio. At the time of mixing, water, vegetable oil, or animal oils and fats can be appropriately added thereto.

The blending ratios of the raw ingredients are listed in Table 1.

[Table 1]

|  | Blending ratio for cat | Blending ratio for dog |
| --- | --- | --- |
| Cereals (corn, wheat flour, corn gluten meal, soybeans, and the like) | 55% by weight to 75% by weight | 65% by weight to 85% by weight |
| Meat (chicken meal, pork meal, and the like) | 10% by weight to 25% by weight | 7% by weight to 20% by weight |
| Seafood (fish meal and the like) | 5% by weight to 15% by weight | 2% by weight to 10% by weight |
| Vitamins and minerals (vitamins are added differently for cats or dogs) | 2% by weight to 5% by weight | 2% by weight to 5% by weight |
| Other additives (salts, reducing sugar, amino acids, chicken extract, and fish extract) | 0.1 % by weight to 12% by weight | 0.1 % by weight to 12% by weight |
| Total | 100% by weight | 100% by weight |

As a method of obtaining the mixture, a known method of grinding the raw ingredients using a grinder and mixing the raw ingredients using a mixer or the like can be used.

The method of granulating the mixture is not particularly limited as long as the pet food can be formed into a shape which is suitable for a pet to eat, and an extruder can be preferably used. A known extruder capable of granulating a mixture of food to have a suitable size can be used.

The term "granulating" means forming the pet food into a shape which is suitable for a pet to eat. In the invention, the shape of food grains to be formed is not particularly limited as long as the shape is suitable for a pet to eat and any kind of shape such as a spherical shape, a polygonal shape, a cylindrical shape, a donut shape, a plate shape or a Go stone shape can be used. Further, in regard to the size of food grains to be formed, the food grains may be small such that a pet can fit all of it in their mouth or may be large such that a pet can bite into the food plural times.

The size and the shape of the food grains are not particularly limited. However, for example, as the size of the food grains for a dog, the shortest diameter and the longest diameter are respectively preferably in the range of 2 mm to 20 mm, more preferably in the range of 3 mm to 18 mm, and most preferably in the range of 4 mm to 16 mm. It is more preferable that the shortest diameter is in the range of 2 mm to 10 mm and the longest diameter is in the range of 6 mm to 20 mm, still more preferable that the shortest diameter is in the range of 3 mm to 8 mm and the longest diameter is in the range of 7 mm to 18 mm, and most preferable that the shortest diameter is in the range of 4 mm to 6 mm and the longest diameter is in the range of 8 mm to 16 mm.

As the shape thereof, for example, it is preferable that the food grains for a dog have a shape of a Go stone whose shortest diameter and longest diameter are respectively preferably in the range of 2 mm to 20 mm, more preferable that the food grains for a dog have a shape of a Go stone whose shortest diameter and longest diameter are preferably in the range of 3 mm to 18 mm, and most preferable that the food grains for a dog have a shape of a Go stone whose shortest diameter and longest diameter are preferably in the range of 4 mm to 16 mm. It is more preferable that the food grains for a dog have a shape of a Go stone whose shortest diameter is in the range of 2 mm to 10 mm and longest diameter is in the range of 6 mm to 20 mm, still more preferable that the food grains for a dog have a shape of a Go stone whose shortest diameter is in the range of 3 mm to 8 mm and longest diameter is in the range of 7 mm to 18 mm, and most preferable that the food grains for a dog have a shape of a Go stone whose shortest diameter is in the range of 4 mm to 6 mm and longest diameter is in the range of 8 mm to 16 mm.

In addition, the size and the shape of the food grains are not particularly limited. However, for example, as the size of the food grains for a cat, the shortest diameter and the longest diameter are respectively preferably in the range of 1.5 mm to 15 mm, more preferably in the range of 2 mm to 12.5 mm, and most preferably in the range of 4 mm to 10 mm. It is more preferable that the shortest diameter is in the range of 1.5 mm to 6 mm and the longest diameter is in the range of 5 mm to 15 mm, still more preferable that the shortest diameter is in the range of 2 mm to 5 mm and the longest diameter is in the range of 6 mm to 12.5 mm, and most preferable that the shortest diameter is in the range of 2.5 mm to 4 mm and the longest diameter is in the range of 7 mm to 10 mm.

As the shape thereof, for example, it is preferable that the food grains for a cat have a shape of a Go stone whose shortest diameter and longest diameter are respectively preferably in the range of 1.5 mm to 15 mm, more preferable that the food grains for a cat have a shape of a Go stone whose shortest diameter and longest diameter are preferably in the range of 2 mm to 12.5 mm, and most preferable that the food grains for a cat have a shape of a Go stone whose shortest diameter and longest diameter are preferably in the range of 4 mm to 10 mm. It is more preferable that the food grains for a cat have a shape of a Go stone whose shortest diameter is in the range of 1.5 mm to 6 mm and longest diameter is in the range of 5 mm to 15 mm, still more preferable that the food grains for a cat have a shape of a Go stone whose shortest diameter is in the range of 2 mm to 5 mm and longest diameter is in the range of 6 mm to 12.5 mm, and most preferable that the food grains for a cat have a shape of a Go stone whose shortest diameter is in the range of 2.5 mm to 4 mm and longest diameter is in the range of 7 mm to 10 mm. When the food grains have the above-described size and shape, the food grains can be easily baked through the inside thereof at the time of heating. Further, the shape of the food grains after granulating may be a plate shape, a cylindrical shape, or a tube shape which is extremely large for a pet to eat in one bite. In this case, it is preferable to make the food grains into small pieces to have a shape which a pet can easily eat the food grains after a drying treatment or a baking treatment described below.

Here, the longest diameter or the shortest diameter indicates a value of the food grain whose diameter becomes the longest or the shortest when the food grains according to the invention stand still on a horizontal surface and the size of the food grains in the horizontal direction or in the vertical direction is measured.

Carbohydrates in the mixture can be pregelatinized by performing the heating treatment when the mixture is formed and granulated in the granulating process. Through pregelatinization, the flavor and food texture of food grains to be obtained are improved and the pet food becomes easily digestible.

The temperature and the time of the heating treatment in the granulating are not particularly limited. In one aspect of the invention, the temperature of the heating treatment is 150°C or lower. In another aspect of the invention, the temperature of the heating treatment is in the range of 70°C to 130°C. In still another aspect of the invention, the temperature of the heating treatment is in the range of 80°C to 120°C. In a case where the food grains are heated at these temperatures, the time for the heating treatment is preferably in the range of 1 minute to 10 minutes and more preferably in the range of 2 minutes to 5 minutes.

When the temperature and the time of the heating treatment are respectively 70°C or higher and 1 minute or longer, the pregelatinization can be sufficiently promoted. When the temperature and the time of the heating treatment are respectively 150°C or lower and 10 minutes or shorter, it is possible to prevent granulation of the food grains from being difficult due to excessive heating of the mixture.

That is, it is preferable that the heating temperature is in the range of 70°C to 130°C and the heating time is in the range of 1 minute to 10 minutes and more preferable that the heating temperature is in the range of 80°C to 120°C and the heating time is in the range of 2 minutes to 5 minutes. In addition, the heating method is not particularly limited, but the food grains are heated in an extruder when granulated in the extruder described in Examples below.

In the granulating process, a treatment of drying the granulated food grains may be carried out. By drying the granulated food grains, an effect of further promoting the generation of aroma components such as pyrazines or the like in the baking process described below can be obtained. Here, description is made in which the drying treatment is carried out in the granulating process, but the drying treatment may be provided separately from the granulating process. Here, the drying treatment indicates a process of reducing the water content in the granulated food grains. In general, since the water content of the food grains during or immediately after granulating is 15% by weight or more and more specifically in the range of 20% by weight to 30% by weight based on the total weight of the food grains, the water content in the drying process can be adjusted to be in the range of 6% by weight to 12% by weight, preferably in the range of 7% by weight to 11% by weight, and more preferably in the range of 8% by weight to 10% by weight.

<Drying treatment>

As the method of drying the food grains, which is not particularly limited, known methods such as a method of naturally drying food grains, a method of drying food grains by blowing warm air, a method of drying food grains by reducing the pressure, and a method of drying food grains by performing freeze-drying can be used. Among these drying methods, a method of drying food grains by blowing warm air can improve the flavor of the pet food.

The temperature of the food grains at the time of drying and the temperature of warm air to be blown to the food grains are not particularly limited. In one aspect of the invention, the temperature is 150°C or lower. In another aspect of the invention, the temperature thereof is in the range of 100°C to 150°C. In still another aspect of the invention, the temperature thereof is in the range of 110°C to 150°C. In still another aspect of the invention, the temperature thereof is in the range of 120°C to 150°C. In a case where the food grains are dried at these temperatures, it is preferable that the warm air has a standard value (for example, 200 Nm$^3$/min) of an exhaust air volume of the entirety of general dryer hot air and the time of the drying treatment is preferably in the range of 1 minute to 120 minutes, more preferably in the range of 5 minutes to 60 minutes, and still more preferably in the range of 10 minutes to 30 minutes.

When the temperature and the time are respectively 100°C or higher and 1 minute or longer, it is possible to dry food grains in a relatively short period of time. When the temperature and the time are respectively 150°C or lower and 120 minutes or shorter, the food grains are prevented from being excessively heated.

That is, it is preferable that the drying temperature is in the range of 110°C to 150°C and the drying time is in the range of 5 minutes to 60 minutes and it is more preferable that the heating temperature is in the range of 120°C to 150°C and the heating time is in the range of 10 minutes to 30 minutes.

In addition, the temperature of the heating treatment may be the same as or different from the temperature of the drying treatment. Further, the heating treatment can be concurrently carried out with the drying treatment and reversely the drying treatment can be concurrently carried out with the heating treatment.

In one aspect of the invention, the water content of the food grains provided for baking is in the range of 6.0% by weight to 12.0% by weight based on the total weight of the food grains. In another aspect of the invention, the water content of the food grains provided for baking is in the range of 7.0% by weight to 11.0% by weight based on the total weight of the food grains. In still another aspect of the invention, the water content of the food grains provided for baking is in the range of 8.0% by weight to 10.0% by weight based on the total weight of the food grains.

When the water content of the food grains is adjusted to be smaller than the water content of the granulated food grains during the drying treatment, an amount of the aroma components to be generated such as pyrazines or the like in the food grains by carrying out the baking treatment described below can be further increased. In addition, the flavor or the food texture can be improved.

<Precoating process>

The granulated food grains may be coated with oils and fats before baking.

Examples of the materials of oils and fats to be added, which are not particularly limited, include animal oils and fats and vegetable oils and fats. As the animal oils and fats, beef tallow, pig fat, bird fat, and fish fat can be exemplified. Known meal extract such as chicken extract (an extract derived from chicken) or fish extract (an extract derived from fish) may be added to the oils and fats.

It is preferable that the amount of the meat extract to be added is in the range described in the section of the blending ratios of the raw ingredients.

The method of coating (adhering) the granulated food grains with oils and fats is performed by adhering the oils and fats to at least a part of the granulated food grains, and this method is not particularly limited unless the method disables the realization of the water adding process described below. As the method of adhering the oils and fats to at least a part of the surface of the food grains, a method of stirring the food grains and the animal oils and fats fluidized by raising the temperature in a coating reel can be exemplified. It is possible to impregnate at least some of the oils and fats into the food grains by maintaining the state in which the fluidized oils and fats are adhered to the surface of the food grains for a predetermined period of time (for example, 1 minute to 30 minutes) during the stirring or after the stirring.

That is, in the invention, the expression of "the granulated food grains are coated with oils and fats" means that oils and fats may be impregnated into the center portion of the food grains or oils and fats may be impregnated into only a shallow region close to the surface of the food grains. From a viewpoint of further improving heating efficiency due to the baking described below, it is preferable to infiltrate oils and fats into the inside of the food grains.

The amount of oils and fats to be added when the coating process is carried out is preferably in the range of 0.01% by weight to 40.0% by weight, more preferably in the range of 0.01% by weight to 30.0% by weight, and still more preferably in the range of 0.01 % by weight to 20.0% by weight based on the total weight of the mixture of raw ingredients before granulating, oils and fats to be added during the precoating process, and oils and fats to be added during the coating process described below. Further, a specific method of the precoating process is not particularly limited, but a method which is the same as the coating process described below can be exemplified.

Since the heating efficiency due to baking is improved by adhering oils and fats to at least the surface of the food grains in the precoating process, it is possible to sufficiently heat (cook) the inside of the food grains in a shorter period of time. Further, by coating at least the surface of the food grains with oils and fats, it is possible to prevent powder of raw ingredients from being generated from the surface of the food grains caused by the food grains rubbing against each other.

The order of the precoating process, the drying process, and the heating process is not particularly limited, but it is preferable that all these processes are carried out before the baking process described below.

<Baking process>

The baking process is a process of baking the food grains. The food grains provided for baking may or may not be subjected to the drying treatment, and the water content of the food grains to which the drying treatment is applied is preferably in the range of 6.0% by weight to 12.0% by weight, more preferably in the range of 7.0% by weight to 11.0% by weight, and most preferably in the range of 8.0% by weight to 10.0% by weight based on the total weight of the food grains. In addition, oils and fats may or may not be added to the food grains provided for baking in the precoating process.

In the invention, the term "baking" means that the food grains are heated in the air at a high temperature in a short period of time. Here, the term "high temperature" means the temperature range of 150°C to 300°C and the term "short time" means the time period of 5 seconds to 200 seconds.

That is, it is preferable that the food grains are heated in the temperature range of 150°C to 300°C for 5 seconds to 200 seconds and more preferable that the food grains are heated in the temperature range of 160°C to 230°C for 5 seconds to 200 seconds.

It is preferable that the temperature for baking is a temperature for generating the aroma components such as pyrazines or the like in the food grains obtained after baking.

Further, components that improve the biting properties of a pet can be generated in the food grains by baking the food grains at a temperature generating the aroma components. In addition, the aroma components make a savory smell so that the biting properties of a pet can be improved.

In the specification, the pyrazines include pyrazine represented by the chemical formula $C_4H_4N_2$ and a pyrazine derivative in which one or more hydrogen atoms included in pyrazine are substituted with an alkyl group having 1 to 6 carbon atoms. The alkyl group having 1 to 6 carbon atoms may be linear, branched and chained, or cyclic, and a linear or branched and chained alkyl group having 1 to 3 carbon atoms is preferable and a methyl group or an ethyl group is more preferable. The number of hydrogen atoms of pyrazine to be substituted is preferably in the range of 1 to 3.

The biting properties of a pet can be improved by the pyrazines being contained in the pet food.

It is more preferable that the pyrazines include 2,5-dimethyl pyrazine (abbreviated as 2,5-DMP in some cases), 2,6-dimethyl pyrazine (abbreviated as 2,6-DM in some cases), and/or 2,3,5-trimethyl pyrazine (abbreviated as 2,3,5-TM in some cases). The food grains baked so as to contain these pyrazines can further improve the biting properties of a pet.

The baking temperature and the baking time can be suitably adjusted based on the shape or the size of the food grains in consideration of increasing the content of the pyrazines in the food grains after baking or improving the flavor and the food texture of the food grains (pet food).

As the method of baking the food grains, which is not particularly limited, a method of arranging the food grains on a net and applying heat rays or hot air to the upper or lower side of the net can be exemplified. As an irradiation source of the heat rays or the hot air, a ceramic heater that generates far-infrared rays, and more specifically, a ceramic heater that generates far-infrared rays heated by a gas burner is preferable and heat rays may be directly radiated or hot air generated from the heat rays may be applied.

By baking the food grains with far-infrared rays, it is possible to further promote improvement of generation efficiency of pyrazines due to the addition of oils and fats during the precoating process. In addition, in a case where reducing sugar is added to the mixture, it is possible to further promote an increase of the preferable flavor due to the Maillard reaction. In a case where amino acids are added to the mixture together with reducing sugar, it is possible to further promote an increase of the preferable flavor due to the Maillard reaction.

By baking the food grains by applying far-infrared rays, it is possible to heat the inside of the food grains faster than a case of food grains grilled (grilling in flames) or roasted (frying) without generating far-infrared rays. As a result, capital investment can be suppressed by simplifying facilities. Moreover, when the food grains are heated by applying far-infrared rays thereto, it is possible to more easily adjust the water content of the food grains after baking and to improve the flavor or the food texture of pet food, thereby obtaining pet food with excellent biting properties of a pet.

Meanwhile, in a case where the food grains are grilled or roasted without generating far-infrared rays as another baking method, the heating time needs to be lengthened in order to heat the inside of the food grains. In this case, in an industrial production line, a problem in which the line length becomes longer and thus the capital investment becomes excessive is generated.

(First baking method)

In regard to the baking temperature and the baking time, a method of heating food grains at 250°C or higher for 5 seconds to 200 seconds can be exemplified. Specifically, it is examined that the food grains can be heated in a temperature range of 250°C to 380°C for a time range of 5 seconds to 200 seconds. In a case where the food grains before first baking have an ordinary shape and size, for example, the following baking temperature can be exemplified. In addition, the expression "an ordinary shape and size," that is, "the food grains before baking have an ordinary shape and size" indicates that the shape is a spherical shape, a polygonal shape, a cylindrical shape, a donut shape, a plate shape or a Go stone shape and, as the size of food grains for a dog, the shortest diameter and the longest diameter thereof are respectively preferably in the range of 2 mm to 20 mm, more preferably in the range of 3 mm to 18 mm, and most preferably in the range of 4 mm to 16 mm. It is more preferable that the shortest diameter is in the range of 2 mm to 10 mm and the longest diameter is in the range of 6 mm to 20 mm, still more preferable that the shortest diameter is in the range of 3 mm to 8 mm and the longest diameter is in the range of 7 mm to 18 mm, and most preferable that the shortest diameter is in the range of 4 mm to 6 mm and the longest diameter is in the range of 8 mm to 16 mm.

As the shape thereof, for example, it is preferable that the food grains for a dog have a shape of a Go stone whose shortest diameter and longest diameter are respectively preferably in the range of 2 mm to 20 mm, more preferable that the food grains for a dog have a shape of a Go stone whose shortest diameter and longest diameter are preferably in the range of 3 mm to 18 mm, and most preferable that the food grains for a dog have a shape of a Go stone whose shortest diameter and longest diameter are preferably in the range of 4 mm to 16 mm. It is more preferable that the food grains for a dog have a shape of a Go stone whose shortest diameter is in the range of 2 mm to 10 mm and longest diameter is in the range of 6 mm to 20 mm, still more preferable that the food grains for a dog have a shape of a Go stone whose shortest diameter is in the range of 3 mm to 8 mm and longest diameter is in the range of 7 mm to 18 mm, and most preferable that the food grains for a dog have a shape of a Go stone whose shortest diameter is in the range of 4 mm to 6 mm and longest diameter is in the range of 8 mm to 16 mm.

In addition, the size and the shape of the food grains are not particularly limited. However, for example, as the size of the food grains for a cat, the shortest diameter and the longest diameter are respectively preferably in the range of 1.5 mm to 15 mm, more preferably in the range of 2 mm to 12.5 mm, and most preferably in the range of 4 mm to 10 mm. It is more preferable that the shortest diameter is in the range of 1.5 mm to 6 mm and the longest diameter is in the range of 5 mm to 15 mm, still more preferable that the shortest diameter is in the range of 2 mm to 5 mm and the longest diameter is in the range of 6 mm to 12.5 mm, and most preferable that the shortest diameter is in the range of 2.5 mm to 4 mm and the longest diameter is in the range of 7 mm to 10 mm.

As the shape thereof, for example, it is preferable that the food grains for a cat have a shape of a Go stone whose shortest diameter and longest diameter are respectively preferably in the range of 1.5 mm to 15 mm, more preferable that the food grains for a cat have a shape of a Go stone whose shortest diameter and longest diameter are preferably in the range of 2 mm to 12.5 mm, and most preferable that the food grains for a cat have a shape of a Go stone whose shortest diameter and longest diameter are preferably in the range of 4 mm to 10 mm. It is more preferable that the food grains for a cat have a shape of a Go stone whose shortest diameter is in the range of 1.5 mm to 6 mm and longest diameter is in the range of 5 mm to 15 mm, still more preferable that the food grains for a cat have a shape of a Go stone whose shortest diameter is in the range of 2 mm to 5 mm and longest diameter is in the range of 6 mm to 12.5 mm, and most preferable that the food grains for a cat have a shape of a Go stone whose shortest diameter is in the range of 2.5 mm to 4 mm and longest diameter is in the range of 7 mm to 10 mm. When the food grains have the above-described size and shape, the food grains can be easily baked through the inside thereof at the time of heating. Further, the shape of the food grains after granulating may be a plate shape, a cylindrical shape, or a tube shape which is extremely large for a pet to eat in one bite. In this case, it is preferable to make the food grains into small pieces to have a shape which a pet can easily eat the food grains after a drying treatment or a baking treatment described below.

In one aspect of the invention, the baking temperature is in the range of 270°C to 370°C. In another aspect of the invention, the baking temperature is in the range of 270°C to 350°C. In still another aspect of the invention, the baking temperature is in the range of 280°C to 330°C. When the baking temperature is in the above-described ranges, the baking time is preferably in the range of 5 seconds to 90 seconds, more preferably in the range of 10 seconds to 75 seconds, still more preferably in the range of 20 seconds to 75 seconds, and particularly preferably in the range of 20 seconds to 45 seconds.

When the baking temperature and the baking time are respectively 250°C or higher and 5 seconds or longer, pyrazines and/or components preferred by a pet (in this case, excluding pyrazines) can be more largely generated in the food grains obtained after baking. When the baking temperature and the baking time are respectively 380°C or lower and 200 seconds or shorter, generation of substances causing a burnt smell or the like disliked by a pet can be suppressed.

(Second baking method)

In a case where the food grains are baked by applying far-infrared rays, it is preferable that the food grains are baked by applying far-infrared rays such that the atmospheric temperature is in the range of 160°C to 230°C from a viewpoint of improving the flavor and the food texture thereof.

As a method of baking food grains by applying far-infrared rays, a method of placing food grains in a furnace whose internal atmosphere (air atmosphere) is in a temperature range of 160°C to 230°C while applying far-infrared rays can be exemplified. At this time, when far-infrared rays are applied such that the temperature in the furnace (temperature at the time of dry firing) before food grains are carried into the furnace is in the range of 200°C to 330°C and then the food grains are carried into the furnace (atmosphere), the food grains can be baked in a temperature range of 160°C to 230°C while applying far-infrared rays to the food grains. In addition, as a method of making the atmosphere in which far-infrared rays are applied to the food grains such that the temperature before the food grains are carried into a furnace is in the range of 200°C to 330°C, a method of setting the temperature of a far-infrared ray irradiation device to be used to be in the range of 280°C to 330°C can be exemplified. When the food grains are carried into the furnace (atmosphere) whose internal atmosphere is in a temperature range of 200°C to 330°C in a dry firing state, the atmospheric temperature is in the range of 160°C to 230°C by being cooled down due to the food grains or influx of the outside air. In a case where the food grains can be stably heated in a temperature range of 160°C to 230°C, the set temperature of a device may be in the range of 160°C to 230°C. The temperatures exemplified here are listed in Table 2.

[Table 2]

|  | Atmospheric temperature | Set temperature of far-infrared ray irradiation device |
|---|---|---|
| Before food grains are carried in (at the time of dry firing) | 200°C to 330°C | 280°C to 330°C |
| After food grains are carried in (at the time of continuously carrying food grains in) | 160°C to 230°C | 160°C to 230°C |

The time for which far-infrared rays are applied such that the atmospheric temperature is in the range of 160°C to 230°C and the food grains are baked may be suitably adjusted according to the size of the food grains. For example, as described above, in the case where the shortest diameter and the longest diameter of the food grains are in the range of 3 mm to 30 mm, the heating time thereof is preferably in the range of 20 seconds to 55 seconds. When the heating conditions are satisfied, since the inside of the food grains are reliably heated, the flavor and the food texture can be further improved. Meanwhile, when the atmospheric temperature is lower than 160°C or the baking time is less than 20 seconds, the inside of the food grains becomes half-baked, and the flavor or the food texture becomes worsened in some cases. In addition, when the baking time is longer than 55 seconds, the surface of the food grains is significantly burnt and an unpleasant burnt smell is generated in some cases.

In order to efficiently irradiate the food grains with far-infrared rays, a method of placing the food grains on a net and irradiating at least one of the upper side and the lower side of the arranged food grains with far-infrared rays is preferable and a method of irradiating both of the upper side and the lower side of the arranged food grains with far-infrared rays is more preferable. According to the method, the lower portion of the food grains can be more efficiently heated compared to a method of placing the food grains on an iron plate and irradiating the upper side of the arranged food grains with far-infrared rays.

As a specific method, for example, a method of irradiating the upper side and the lower side of the food grains with far-infrared rays while conveying a metal net on which food grains are placed using a net conveyor as illustrated in Fig. 1 can be exemplified. The heating time of the food grains can be adjusted by adjusting the conveying speed of the food grains.

The heating time of the food grains can be adjusted by adjusting the speed of the net conveyor when the food grains are conveyed. The water content of the food grains can be more reduced as the heating time becomes longer by making the speed of the net conveyor slow.

As irradiation sources of the far-infrared rays (here, the wavelength thereof is in the range of 4 μm to 1000 μm), heated ceramics or quartz, or burning charcoal can be used. It is possible to irradiate the food grains with far-infrared rays radiated from ceramic or quartz heated with gas flames or electric heating wires. A ceramic heater is preferably used because of high durability and capability of strong application of far-infrared rays. As the method of heating ceramics, using gas flames is preferable from viewpoints of capital investment and the running cost.

The distance between the ceramic heater radiating far-infrared rays and the food grains is not particularly limited. In one aspect of the invention, the distance therebetween is in the range of 80 mm to 120 mm. In another aspect of the invention, the distance therebetween is in the range of 90 mm to 110 mm. When the distance therebetween satisfies the above-described ranges, the inside of the food grains can be more reliably heated and the surface thereof is not heavily burnt.

The water content of the food grains obtained after the baking process is not particularly limited, but the following ranges based on the total weight of the food grains can be exemplified.

In one aspect of the invention, the water content thereof is in the range of 2% by weight to 6% by weight based on the total weight of the food grains. In another aspect of the invention, the water content thereof is in the range of 3% by weight to 6% by weight based on the total weight of the food grains. In still another aspect of the invention, the water content thereof is in the range of 3% by weight to 5% by weight based on the total weight of the food grains. In addition, the water content of the specification can be measured according to a method described below.

<Water adding process>

Water is added to the food grains obtained through baking. Since the hardness of the food grains is relaxed by adding water to the baked food grains, it is possible to make the food grains suitable for a pet to easily eat. In addition, since the aroma components are easily evaporated when water is evaporated from the food grains, the appetite of a pet can be improved due to the aroma components and the biting properties of a pet can be improved.

The method of adding water to the food grains obtained through baking is not particularly limited as long as the food grains can contain a predetermined content of water. For example, a known coating reel being used for coating food grains with the above-described oils and fats can be used. The temperature of water to be added is not particularly limited, water whose temperature is in the range of 10°C to 40°C may be generally used.

As the water content of the food grains after water is added thereto, for example, the following ranges based on the total weight of the food grains after water is added can be exemplified. In one aspect of the invention, the water content thereof is in the range of 6% by weight to 12% by weight based on the total weight of the food grains. In another aspect of the invention, the water content thereof is in the range of 7% by weight to 11% by weight based on the total weight of the food grains. In still another aspect of the invention, the water content is in the range of 8% by weight to 10% by weight based on the total weight of the food grains.

The water content thereof is preferably 6% by weight or more, more preferably 7% by weight or more, and still more preferably 8% by weight or more. When the water content thereof is in the above-described ranges, the hardness of the food grains is sufficiently relaxed and thus the effect of improving the appetite of a pet due to the aroma components can be sufficiently obtained. When the water content thereof is 12% by weight or less based on the total weight of the food grains, generation of mold and microorganisms can be prevented.

The water content can be suitably adjusted by measuring the water content of target food grains according to a method of measuring the water content described below.

<Coating process>

Oils and fats may be added to the food grains obtained through addition of water. By adding oils and fats thereto, it is possible to improve the biting properties of a pet and to increase the calories of the pet food according to the necessity.

The content of oils and fats in the coating process can be adjusted in conjunction with the amount of oils and fats to be added in the precoating process. For example, the total amount of oils and fats to be added in the precoating process and oils and fats to be added in the coating process can be adjusted to be in the range of 2.0% by weight to 15.0% by weight based on the total weight of the food grains obtained after the coating process.

The kind of oils and fats to be added in the coating process is not particularly limited, but oils and fats which are the same as the oils and fats to be added in the precoating process can be used as the above-described oils and fats. The method of adding the oils and fats to the food grains to which water is added is not particularly limited. For example, the method of adding the oils and fats using the above-described coating reel can be used.

In regard to the temperature at which the oils and fats are added to the food grains, the main purpose at this time is not to solidify the oils and fats. As long as the purpose can be achieved at the temperature, the temperature at which the oils and fats are added is not particularly limited. From a viewpoint of preventing oxidation of the oils and fats, a lower temperature is preferable and, for example, the temperature can be adjusted to be in the range of 40°C to 80°C.

The ratio of the oils and fats to be added to the food grains can be suitably adjusted according to the calorie planning and, for example, the oils and fats can be added in a ratio in which the total content of components of oils and fats (total fat content) is in the range of 5% by weight to 20% by weight based on the total weight of the pet food after production.

Further, the main components of "fat" and "oils and fats" are generally glycerin ester of fatty acids (also referred to as "neutral fat").

The water content of the food grains obtained after the coating process may be similar to the water content of the food grains obtained after the above-described water adding process.

As the water content of the food grains after the coating process, the following ranges based on the total weight of the food grains can be exemplified.

In one aspect of the invention, the water content thereof is in the range of 6% by weight to 12% by weight. In another aspect of the invention, the water content thereof is in the range of 7% by weight to 11 % by weight. In still another aspect of the invention, the water content is in the range of 8% by weight to 10% by weight.

The water content is preferably 6% by weight or more, more preferably 7% by weight or more, and still more preferably 8% by weight or more. When the water content is in the above-described proper ranges, the effect of increasing appetite of a pet due to the aroma components can be sufficiently obtained.

<Method of measuring water content>

The water contents of the food grains during the producing process and the pet food after production can be measured according to the following heating and drying method under the normal pressure.

(Heating and drying method under normal pressure)

The weight of an aluminum weighing can (referred to as "W1" in the following equation) is measured as a constant weight value. The weight after a sample is put in the aluminum weighing can (referred to as "W2" in the following equation) is weighed. Next, the sample is dried at 135°C for 2 hours using a forced circulation type hot air drier. After the sample is left to be cooled in a dry atmosphere (in a silica gel desiccator), the weight thereof (referred to as "W3" in the following equation) is weighed. The water content is acquired using the following equation from the obtained respective weights.

$$\text{Water content (\%)} = (W2 - W3) \div (W2 - W1) \times 100$$

<Method of measuring content of pyrazines>

The contents of pyrazines of the food grains during the producing process and the pet food after production can be measured according to gas chromatograph-mass spectrometry. Specifically, it is preferable that the pyrazines are measured according to the following solvent extraction method.

(Solvent extraction method)

50 mL of water and 20 mL of diethyl ether are added to and immersed in 2 g to 10 g of pet food samples, the mixture is stirred using a homogenizer at a temperature below the freezing point, 20 g of sodium chloride is added thereto, shaking and extracting are performed for 10 minutes, and centrifugal separation is performed on the resultant at 2000 rpm/min for 5 minutes. A diethyl ether layer is dehydrated, filtered, and concentrated to 4 mL, and then the resultant is set as a test solution. A predetermined amount of the test solution is injected into a gas chromatograph-mass spectrometer, a mass spectrum of a peak corresponding to the pyrazines is obtained using gas chromatogram, and the substance is identified. The content of the pyrazines in the samples can be calculated from the obtained gas chromatogram. For example, when food grains to which the baking treatment is applied and food grains to which the baking treatment is not applied are respectively used as samples and measurement is performed thereon, the content of the pyrazines can be measured. Hereinafter, the proper conditions are described.

(Conditions of operating gas chromatograph-mass spectrometer)

Type: 6890N/5975B inertXL [Agilent Technologies, Inc.], column: DB-WAX [Agilent Technologies, Inc.]

$$\phi 0.25 \text{ mm} \times 30 \text{ m}$$

Film thickness: 0.25 $\mu$m, injection amount: 1 $\mu$L, introduction system: split (1:5), temperature: injection to sample: 220°C, column: 60°C (holding for 1 minute) $\rightarrow$ 10°C/min raising temperature $\rightarrow$ 220°C, gas flow rate: helium (carrier gas) 1 mL/min, temperature of ion source: 230°, ionizing method: EI, set mass number: m/z = 108.42 (2,5-DMP and 2,6-DMP), m/z = 122.42 (2,3,5-TMP).

<Method of measuring fat (also referred to as oils and fats) content>

The fat contents of the food grains during the producing process and the pet food after production can be measured according to an acid decomposition diethyl ether extraction method described below.

(Acid decomposition diethyl ether extraction method)

2 g of an analysis sample is exactly weighed and put into 100 mL of a beaker, 2 mL of ethanol is added thereto, the mixture is mixed with a glass rod to moisturizing the sample, 20 mL of 28% hydrochloric acid is added thereto to be covered with a watch glass, and the resultant is occasionally mixed in a water bath whose temperature is in the range of 70°C to 80°C and heated for 1 hour and then left to be cooled.

The contents in the above-described beaker is put in 200 mL of a separatory funnel A, the beaker is sequentially washed with 10 mL of ethanol and 25 mL of diethyl ether, and a washing liquid is put together in the separatory funnel A.

Further, 75 mL of diethyl ether is added to the separatory funnel A and mixed with each other, and the separatory funnel A is left to stand still. A diethyl ether layer (upper layer) is picked up using a pipette or the like and added to 300 mL of the separatory funnel B to which 20 mL of water is added in advance.

50 mL of diethyl ether is added to the separatory funnel A, the same operation is performed twice, each of the diethyl ether layers are picked up with a pipette or the like, and the layers are put together in a separatory funnel B.

The separatory funnel B is shaked and mixed and then left to stand still, and a water layer (lower layer) is disposed. Further, 20 mL of water is added to the separatory funnel B and the same operation is performed twice. The diethyl ether layer is filtered using a fat weighing bottle or 300 mL an eggplant-shaped flask in a funnel whose inside is filled with absorbent cotton and to which an appropriate amount of 10 g or more of sodium sulfate (anhydrous) is added. The fat weighing bottle or the eggplant-shaped flask are dried in a temperature range of 95°C to 100°C in advance, are left to be cooled in a desiccator, and the weight thereof is exactly weighed and then used.

Next, a Soxhlet extractor is used in a case where a fat weighing bottle is used and a rotary evaporator is used in a case where an eggplant-shaped flask is used, and the filtered diethyl ether is recovered. The recovered diethyl ether is volatilized, dried in the temperature range of 95°C to 100°C for 3 hours, and left to be cooled in a desiccator. Next, the weight thereof is exactly weighed and the crude fat amount in the sample is calculated.

«Pet food»

Pet food of a second embodiment of the invention is pet food produced according to the method of producing the pet food of the first embodiment described above.

As the water content of the pet food, the following ranges are exemplified. In one aspect of the invention, the water content thereof is in the range of 6% by weight to 12% by weight. In another aspect of the invention, the water content thereof is in the range of 7% by weight to 11 % by weight. In still another aspect of the invention, the water content is in the range of 8% by weight to 10% by weight.

The water content is preferably 6% by weight or more, more preferably 7% by weight or more, and still more preferably 8% by weight or more. When the water content thereof is in the above-described ranges, it is possible to prevent the pet food from being extremely solidified or becoming extremely brittle to the extent that the shape thereof cannot be maintained.

The pet food of the invention can be produced according to the method described above using known raw ingredients in the related art.

The pet food of the invention can be eaten by various animals, but is preferred by a cat or a dog and particularly preferred by a dog.

In order to inform the pet owner that the pet food of the invention is suitable for a dog or a cat, when the pet food of the present invention is packaged and sold, it is possible to sell the product in a state in which a fact that the pet food is suitable for a dog or a cat is displayed on the package.

In addition, it is preferable that the pet food according to the invention is sold by being accommodated in a water vapor barriable package or container. The reason for this is that a decrease in the water content immediately after the production and a decrease in aroma components can be suppressed.

As a water vapor barriable package, a form in which a barrier material obtained by combining a material to which 0 micron of a barrier, 15 micron of nylon, and 40 micron of LLDPE are attached and a material to which VMPET12 and CPP40 are attached is sealed as a packaging material can be exemplified.

Further, it is preferable that the pet food according to the invention is accommodated in the water vapor barriable package or container according to each feeding amount provided for a pet such as a cat or a dog per each time or an amount obtained by further dividing the feeding amount provided for a pet per each time. The feeding amount provided for a pet per each time is preferably in the range of 15 g to 700 g and more preferably in the range of 60 g to 80 g.

[Examples]

Hereinafter, the invention will be described in detail with reference to Examples, but the invention is not limited to Examples below.

In the composition listed in Table 3, cereals, meat, seafood, vitamins, amino acids (hydrolyzates of proteins), and reducing sugar (hydrous glucose) were ground by a grinder and mixed by a mixer, thereby obtaining a mixture of raw ingredients. At this time, reducing sugar was largely blended compared to amino acids.

As the cereals, corn, wheat flour, corn gluten meal, and soybeans are included. As the meat, chicken meal and pork meal are included. As the seafood, fish meal is included. Further, minerals may be included in addition to the vitamins.

[Table 3]

| <Blending ratios of raw ingredients (unit: parts by weight)> | | | | |
|---|---|---|---|---|
| | Example 1 | Example 2 | Comparative Example 1 | Comparative Example 2 |
| Cereals | 62 | 62 | 62 | 62 |

(continued)

| <Blending ratios of raw ingredients (unit: parts by weight)> | | | | |
|---|---|---|---|---|
| | Example 1 | Example 2 | Comparative Example 1 | Comparative Example 2 |
| Meat | 13 | 13 | 13 | 13 |
| Seafood | 8 | 8 | 8 | 8 |
| Vitamins | 2 | 2 | 2 | 2 |
| Reducing sugar and amino acids | 0 | 3 | 0 | 3 |
| Total | 85 | 88 | 85 | 88 |

The obtained mixture was granulated such that the food grains had a shape of a Go stone and the diameter and the height (also referred to as the thickness) thereof were in the range of 3 mm to 30 mm using an extruder. At this time, starch components were pregelatinized by carrying out a heating treatment in a temperature range of 80°C to 100°C for 3 minutes to 6 minutes.

A drying treatment was performed on the obtained food grains by applying hot air in the temperature range of 100°C to 105°C for 10 minutes to 30 minutes using a drier, thereby obtaining each of the food grains having the water contents listed in Table 4.

Next, as illustrated in Fig. 1, each food grain was placed on a metal net and conveyed using a net conveyor 3, the upper side and the lower side of the net were irradiated with far-infrared rays in the inside of a furnace 2 including a ceramic heater 1, and food grains 4 were baked. Specifically, the conveying speed of the net carried by a net conveyor was adjusted such that the temperature in the furnace (indicating the temperature at the time of dry firing) before the food grains were conveyed was adjusted to be in the range of 220°C to 260°C, the temperature in the furnace at the time when the food grains were continuously conveyed (indicating the temperature at the time of circulating grains) was adjusted to be in the range of 190°C to 230°C, and the baking time for each food grain became 30 seconds. At this time, the distance of the ceramic heater separated from the food grains was set to approximately 100 mm. Further, the temperature in the furnace (indicating the atmospheric temperature) was monitored by installing a thermometer in a position upwardly separated from the net with an interval of 30 mm, laterally separated from the end of the net with an interval of 350 mm, and separated from the center portion of the ceramic heater with an interval of 95 mm. After baking, the food grains carried out from the furnace were naturally cooled in the air during the conveyance with the net conveyor.

Each food grain obtained through baking was put into a coating reel and water was added to each food grain so as to have the water content listed in Table 4 by bringing water into contact with food grains and stirring both. In addition, the following coating process was applied to the food grains of Comparative Examples 1 and 2 without performing the water adding treatment.

Next, beef tallow was added to the surface and the inside of the food grains by putting each food grain into the coating reel, heating at 40°C or higher, and adding a small amount of beef tallow while mixing the mixture. The water contents of the obtained pet food and pet food as a finished product are listed in Table 4.

[Table 4]

| <Water content after each treatment (unit: % by weight)> | | | | |
|---|---|---|---|---|
| Pet food | Example 1 | Example 2 | Comparative Example 1 | Comparative Example 2 |
| After drying treatment | 8.5 | 7.4 | 8.5 | 14.9 |
| After baking treatment | 4.0 | 3.7 | 4.0 | 9.0 |
| After water adding treatment | 9.0 | 9.0 | Not carried out | Not carried out |
| Finished product | 8.6 | 8.6 | 3.8 | 8.6 |

By producing food grains according to the above-described production method, pet food of Example 1 to which water was added after baking; pet food of Example 2 which contained reducing sugar and amino acids in the food grains before baking and to which water was added after baking; pet food of Comparative Example 1 which was produced in the same manner as that of Example 1 except that water was not added after baking; and pet food of Comparative Example 2 which was produced in the same manner as Example 2 except that the water content before baking was increased and water was not added after baking were obtained.

<Evaluation of preference>

The preference of each produced pet food was evaluated according to the following method. The results are listed in Table 5.

(Test 1)

In order to research which pet food between the pet food of Example 1 and the pet food of Comparative Example 1 had higher preference, a test was performed by monitoring ten male and female dogs whose ages were in the range of 2 years to 10 years for 2 days.

In the first day, 230 g of each pet food selected from the left in one side and from the right in the other side for feeding one dog at the same time and then the amount of pet food eaten by a dog was measured after one hour. The amount of ingested pet food of Examples and the amount of ingested pet food of Comparative Examples were acquired in terms of the percentage based on the total weight of the pet food eaten by one dog for the first day. The percentages obtained from ten dogs being monitored were averaged and set as the result of the first day.

In the second day, 230 g of each pet food selected from the right in one side and from the left in the other side for feeding one dog at the same time and then the amount of pet food eaten by a dog was measured after one hour.

The amount of ingested pet food of Examples and the amount of ingested pet food of Comparative Examples were acquired in terms of the percentage based on the total weight of the pet food eaten by one dog for the second day. The percentages obtained from ten dogs being monitored were averaged and set as the result of the second day.

Finally, the results of the first and second days were averaged, and the ratios (preference scores) of the amounts of ingested pet food as the final results were acquired. It is indicated that a dog being monitored ate the pet food with a good appetite as the numeric value of the preference is higher.

(Test 2)

A test was performed in the same manner as the test 1 except that the pet food of Example 1 was changed to the pet food of Example 2 and the pet food of Comparative Example 1 was changed to the pet food of Comparative Example 2. The results are listed in Table 5.

[Table 5]

| <Preference scores (unit: %)> | | | | |
|---|---|---|---|---|
| | Test 1 | | Test 2 | |
| Pet food | Example 1 | Comparative Example 1 | Example 2 | Comparative Example 2 |
| Preference | 87 | 13 | 65 | 35 |

In Table 5, it is understood that the biting properties are excellent as the values of the preference scores are larger. For example, the preference score of Example 1 is 87%. The result means that the preference score of Comparative Example 1 provided at the same time is "100 - 87 = 13%."

From the results of the test 1, it is obvious that the preference of Example 1 is more excellent than the preference of Comparative Example 1. By adding water to the food grains after baking, the preference of pet food is remarkably improved.

From the results of the test 2, it is obvious that the preference of Example 2 is more excellent than the preference of Comparative Example 2.

Further, the pet food of Example 2 has a savory smell stronger than that of the pet food of Comparative Example 2. As a reason for this, it is assumed that the pet food of Comparative Example 2 has a high water content before baking and thus an effect which can be obtained at the time of baking is insufficient and the aroma components having a savory smell are not largely generated.

As one factor of the pet food of Example 2 having excellent preference, it is assumed that the flavor of the pet food is improved due to the Maillard reaction between added reducing sugar and amino acids at the time of producing the pet food of Example 2.

Respective configurations and combinations thereof of the respective embodiments described above are merely examples and addition, omission, substitution, and other modifications of configurations are possible within the range not departing from the scope of the present invention. Further, the present invention is not limited by the respective embodiments and only limited by the range of claims.

Industrial Applicability

The pet food of the invention can be widely used in a field of animal food of pet animals.

Reference Signs List

1:  Ceramic heater
2:  Furnace
3:  Net conveyor
4:  Food grains
5:  Transfer line of food grains
6:  Container for recovering baked food grains

**Claims**

1.  A method of producing pet food comprising:

    granulating a mixture of raw ingredients to form food grains; baking the food grains; and
    adding water to the food grains obtained by the baking.

2.  The method of producing pet food according to claim 1, wherein the water content of the food grains obtained after the adding of water is in a range of 6% by weight to 12% by weight based on the total mass of the food grains.

3.  The method of producing pet food according to claim 1 or 2, wherein the water content of the food grains provided for the baking is in a range of 6% by weight to 12% by weight based on the total mass of the food grains.

4.  The method of producing pet food according to any one of claims 1 to 3, wherein the mixture of raw ingredients contains reducing sugar and amino acids.

5.  The method of producing pet food according to any one of claims 1 to 4, further comprising applying far-infrared rays to perform the baking.

6.  The method of producing pet food according to any one of claims 1 to 5, further comprising granulating food grains whose shortest diameter and longest diameter are in a range of 3 mm to 30 mm.

7.  The method of producing pet food according to any one of claims 1 to 6, further comprising drying the granulated food grains with hot air in a temperature range of 100°C to 150°C before the baking.

8.  The method of producing pet food according to any one of claims 1 to 7, further comprising coating the food grains with oils and fats after the adding of water.

9.  Pet food which is manufactured by the method of manufacturing pet food according to any one of claims 1 to 8.

FIG. 1

<table>
<tr><td colspan="2" align="center">**INTERNATIONAL SEARCH REPORT**</td><td>International application No.<br>PCT/JP2013/084071</td></tr>
</table>

A. CLASSIFICATION OF SUBJECT MATTER
*A23K1/18(2006.01)i, A23K1/16(2006.01)i*

According to International Patent Classification (IPC) or to both national classification and IPC

B. FIELDS SEARCHED

Minimum documentation searched (classification system followed by classification symbols)
A23K1/00-3/04

Documentation searched other than minimum documentation to the extent that such documents are included in the fields searched
Jitsuyo Shinan Koho           1922-1996   Jitsuyo Shinan Toroku Koho   1996-2014
Kokai Jitsuyo Shinan Koho     1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-55050 A (Lion Trading Co., Ltd.),<br>02 March 2006 (02.03.2006),<br>paragraph [0028]<br>(Family: none) | 1-3,6,7,9<br>4,5,8 |
| Y | Topics -Food Peptide\|Pepetide wa Miryokuteki na Pet Food Sozai, [online], 18 April 2009 (18.04.2009) (Archive), [retrieval date 18 March 2014 (18.03.2014)], Internet <URL,htts://web.archive.org/web/20090418004943/http://topics.foodpeptide.com/?eid=553569> | 4 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18 March, 2014 (18.03.14) | Date of mailing of the international search report<br>01 April, 2014 (01.04.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/084071

C (Continuation).  DOCUMENTS CONSIDERED TO BE RELEVANT

| Category* | Citation of document, with indication, where appropriate, of the relevant passages | Relevant to claim No. |
|---|---|---|
| Y | Kenkyu no Keyword (2) Maillard Hanno, Laboratory of Food Function and Safety, Kitasato University, [online], 17 June 2010 (17.06.2010), [retrieval date 18 March 2014 (18.03.2014)], Internet <URL:http://www.food-kitasato.jp/news/news100617.html> | 4 |
| Y | JP 2004-33095 A  (Inaba Foods Co., Ltd.), 05 February 2004 (05.02.2004), paragraph [0017] (Family: none) | 5 |
| Y | JP 2012-130347 A  (Hill's Pet Nutrition, Inc.), 12 July 2012 (12.07.2012), paragraph [0021] & JP 2007-503835 A        & JP 2013-66483 A & EP 1659880 A            & WO 2005/025322 A2 & CA 2533590 A            & CN 1845681 A & RU 2006110939 A         & AU 2004272017 A & MX PA06000693 A | 8 |
| Y | JP 2012-70724 A  (Uni-Charm Corp.), 12 April 2012 (12.04.2012), paragraph [0029] & US 2013/0164413 A1     & EP 2611309 A & WO 2012/029285 A1     & AU 2011297575 A & CA 2809220 A           & CN 103124500 A & MX 2013002278 A        & EA 201300098 A | 8 |

Form PCT/ISA/210 (continuation of second sheet) (July 2009)

**EP 2 936 996 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012277502 A
- JP 2629003 B